(19) Europäisches Patentamt
European Patent Office
Office européen des brevets

(11) **EP 3 452 897 B1**

(12) **EUROPEAN PATENT SPECIFICATION**

(45) Date of publication and mention
of the grant of the patent:
**19.02.2020 Bulletin 2020/08**

(21) Application number: **17722418.5**

(22) Date of filing: **04.05.2017**

(51) Int Cl.:
*G06F 7/72* (2006.01)          *H04L 9/00* (2006.01)
*H04L 9/30* (2006.01)

(86) International application number:
**PCT/EP2017/060717**

(87) International publication number:
**WO 2017/191288 (09.11.2017 Gazette 2017/45)**

(54) **COUNTERMEASURE TO SAFE-ERROR FAULT INJECTION ATTACKS ON CRYPTOGRAPHIC EXPONENTIATION ALGORITHMS**

GEGENMASSNAHME BEI SICHEREN FEHLERANGRIFFEN DURCH FEHLERINJEKTIONEN AUF KRYPTOGRAFISCHEN POTENZIERUNGSALGORITHMEN

CONTRE-MESURE CONTRE DES ATTAQUES PAR INJECTION DE DÉFAUT EXEMPTE D'ERREUR SUR DES ALGORITHMES D'EXPONENTIATION CRYPTOGRAPHIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.05.2016 EP 16305520**

(43) Date of publication of application:
**13.03.2019 Bulletin 2019/11**

(73) Proprietor: **Thales Dis France SA**
**92190 Meudon (FR)**

(72) Inventor: **ADJEDJ, Michaël**
**92220 Meudon (FR)**

(74) Representative: **Lotaut, Yacine Diaw**
**Thales Dis France SA**
**Intellectual Property Department**
**6, rue de la Verrerie**
**92190 Meudon (FR)**

(56) References cited:
**EP-A1- 2 015 171      EP-A2- 2 605 232**

**Description**

**BACKGROUND**

**Technical Field**

The present invention relates to a countermeasure to safe-error fault injection attacks on cryptographic exponentiation algorithms.

It finds applications, in particular, in cryptographic methods comprising a modular exponentiation calculations for generating a second message *b from a first message a,* such that $b = a^d$ modulus *n*, where, *d* is a private key and *n* is a public modulus. It can be used, in such applications, for securing the cryptographic method against invasive attacks such as safe-error fault injection attacks. More specifically, the present invention proposes using a counter-measure based on the Montgomery calculation.

**Related Art**

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Modular exponentiation is used, in particular, in cryptosystems such as RSA or DSA. RSA is a cryptographic technique used to encrypt a clear text message and decrypt an encrypted message, and DSA is a cryptographic technique used to produce a signature of given message and to verify validity of such a signature. These techniques use the logic of public keys.

For RSA, the efficiency of the cryptographic technique is based on the difficulty for hackers to factorise large numbers. RSA is named after its three inventors' initials, namely Rivest, Shamir and Adleman, and was introduced in 1977 (see Rivest, R.L, Shamir, A., Adelman, L.M.: "A method for obtaining digital signatures and public-key cyptosystems", Technical Report MIT/LCS/TM-82, 1977). It has been patented by the MIT in 1983 at the United States. The US patent has expired on September 22nd 2000.

DSA (Digital Signature Algorithm) is an algorithm standardised by the NIST at the United States. This algorithm is a part of the DSS (Digital Signature Standard) which was implemented in 1993.

The modular exponentiation is a key operation for public key cryptosystems such as RSA or DSA. The result of this modular exponentiation gives the second message *b* by computing $b = a^d \bmod n,$ where the exponent *d* is a non-null integer corresponding to a private key, and where *n* is a large integer public modulus. In practice, it has been proven that it is unfeasible for an attacker to deduce the private exponent *k* from a known couple (*a,b*).

One way to implement a modular exponentiation in a cryptographic algorithm consists in using the binary decomposition of the exponent. This so-called "binary exponentiation" method is also known as the "square-and-multiply" method. It was explained by Knuth in 1997. The idea behind this method is to compute $a^d$ using the binary representation of exponent *d*. The exponentiation operation is thus splitted into a series of squaring and multiplication operations. Assuming that *k* denotes the bit-length of exponent *d,* said exponent can be expressed in binary representation as *d* = $(d_{k-1} d_{k-2} ... d_1 d_0)_2$ and $d = \sum_{i=0}^{k-1} d_i \times 2^i$, where $d_i \in \{0,1\}$.

The binary exponentiation method allows speeding-up exponentiation calculation. A binary exponentiation algorithm can be implemented by the exemplary pseudo-code below, wherein the exponentiation is computed starting from the most significant bit (MSB) of the exponent *d* and by proceeding toward its least significant bit (LSB):

```
Input: n, d=(d_k-1,…,d_1, d_0)₂, a
        result = 1
        For i = k-1 dowto 0 do
                result = (result x result) mod n
                if d_i == 1 then
                        result = (result x a) mod n
                end if
        end for
return result                          Binary Exponentiation Algorithm
```

The computational complexity for this algorithm is $2x(k/2)+1x(k/2) = 1.5xk$ multiplications to evaluate $a^d \bmod n$. Thus, such an algorithm suits to resource-limited devices.

However, the calculation performed for each bit of the exponent which is equal to the binary value '1' can reveal the private key $d$ to a hacker. This can be achieved by the analysis of the device power consumption when the decryption process is being performed. Indeed, a significantly higher power is consumed by any computer unit when calculations are being performed by said computer unit, compared to power consumption in the absence of running calculations. Thus, at each instant the computation load of the binary exponentiation implementation depends on the binary value of the current bit of the exponent which is being processed, and hence monitoring the current sunk by the calculator can reveal quite easily each bit of said exponent.

Several options to address this problem have been considered. In particular, introduction of countermeasures has been proposed to prevent detection by a hacker of any variation in the computation load occurring while the signature is being calculated or verified.

One measure against such attacks, known as "Square-And-Multiply-Always" may thus consist in adding a dummy calculation if the scanned bit is '0', instead of doing nothing. Such dummy calculation can be, for instance, a modular multiplication of the message a by a constant or random number. In that case, the above pseudo-code of the binary exponentiation algorithm becomes:

```
Input: n, d=(d_k-1,…,d_1, d_0)2, a
        result = 1
        dummy = 1
        For i = k-1 dowto 0 do
                result = (result x result) mod n            <= Step (1)
                if d_i == 1 then
                        result = (result x a) mod n
                else                                         <= Step (2)
                        dummy = (dummy x a) mod n
                end if
        end for
return result                                                First
counter-measure: "dummy calculation"
```

However this countermeasure is vulnerable to another kind of attacks called "fault injection attacks". Fault injection attacks are based on the idea of introducing faulty data into the cryptographic computation to identify the private key by analyzing the mathematical and statistical properties of the erroneously computed results. Indeed, by perturbing the execution flow of the modular exponentiation, comparing the (wrong) result with the expected one can reveal information about secret data manipulated.

This attack uses the fact that when the current bit of the exponent of a private key is equal to 0, the fault injection during Step (2) has no effect since the multiplication is a dummy operation. Therefore, the attack is performed by introducing transient random computational faults during the potentially dummy multiplication. The exponent bit can be obtained by examining the correctness of the output.

More specifically, introducing a perturbation at step (2) of the process performed by the above exemplary pseudo-code has no effect on the final result if the in-place multiplication was in fact a dummy one. In the same manner, a perturbation introduced at step (2) of the iterative calculation has a visible effect on the final result if the in-place multiplication was a real one. It follows that:

- if the final result is different from the one expected, it means that the perturbation has been done during a real multiplication, revealing the scanned bit '1', whereas,

- if the final result is unchanged, it means that the perturbation has been done during a dummy one, revealing the scanned bit '0'.

By repeating such attacks on each bit of the exponent and by analysing the implications on the final results, a hacker can recover the full exponent. This can be highly detrimental if this exponent is a critical data such as the RSA private key.

There is another type of attack called "safe-error fault injection", i.e. faults which will keep the output of the exponentiation unchanged. Let us consider a second-order safe error attack, i.e. an attack by which the attacker injects two faults during the same computation and observes if the result remains valid or not. Suppose the attacker injects a fault during the multiplication at step i of the exponentiation $a^r$ with r being a random number, and another fault during the multiplication at step i of the exponentiation $a^{r*}$ where $r*=d-r$. These two faults have no effect on the computation as long as $(r_i, r*_i) = (0,0)$. By repeating the process, the attacker obtains an estimation of the probability to get (0,0) for the bit at binary rank i of his choice. This probability is strongly correlated with the value of the bits $d_i$. This observation allows the attacker to learn the secret exponent. It has been described in details in the paper "FAULT ANALYSIS IN CRYPTOGRAPHY", by Joye, Tunstall, Chapter 7/8.

Another countermeasure consists in randomizing the exponent as described in patent document WO 98/52319 'IMPROVED METHOD AND APPARATUS FOR PROTECTING PUBLIC KEY SCHEMES FROM TIMING AND FAULT ATTACKS'. Instead of computing $a^d \bmod n$, one can compute $a^{d + k.\varphi(n)} \bmod n$, where $k$ is a random integer and $\varphi$ is the Euler's $\varphi$ function. In case $n=p.q$ is a RSA modulus, it gives $\varphi(n) = (p-1)x(q-1)$. Thus the exponent becomes $d + k.\varphi(n)$. To efficiently thwart fault injection attacks, it may be considered using at least a 32-bits long random integer $k$. But the exponent becomes very large, and thus makes the computation of the whole exponentiation significantly more time-consuming.

French patent FR 2884088 entitled "CRYPTOGRAPHIC METHOD AND DEVICE FOR PROTECTING PUBLIC-KEY SOFTWARE AGAINST FAULT ATTACKS" discloses decomposing the above computation into two distinct computation steps, and to eventually recombine the final result. According to the disclosed method, the exponent is decomposed in $d = d_1 + d_2$ in a random way, and there is computed $a^{d1} \bmod n$ on the one hand and $a^{d2} \bmod n$ on the other hand, and finally the two obtained results are multiplied to obtain the final result. But this requires twice as much calculations to be carried out.

Other possible countermeasures include the use of addition chains ("SECURING RSA AGAINST FAULT ANALYSIS BY DOUBLE ADDITION CHAIN EXPONENTIATION", Rivain, https://eprint.iacr.org/2009/165.pdf). It needs an additional temporary variable, which is updated along with the other one on each bit. Throughout the computation, these two variables satisfy a common relation that can be verified at the end of the exponentiation process. If the relation does not hold, the computation may have been perturbed, and additional measures have to be taken. This counter-measure needs another register to store the second temporary variable, and also needs a final check, and thus additional computations.

Patent EP 2222012, entitled "METHOD AND DEVICE FOR COUNTERING FAULT ATTACKS", discloses a method which consists in using the public exponent "e" to verify that the result is correct. It implies of course the computation of an addition exponentiation and a final comparison.

The method described in patent US 8,139,763 entitled "RANDOMIZED RSA-BASED CRYPTOGRAPHIC EXPONENTIATION RESISTANT TO SIDE CHANNEL AND FAULT ATTACKS" consists in randomizing the exponent. The resulting randomized exponent is bigger and implies more computation loops.

Finally, the idea of the method disclosed in Patent EP 1531579 "RSA PUBLIC KEY GENERATION APPARATUS, RSA DECRYPTION APPARATUS, AND RSA SIGNATURE APPARATUS" is to add extra (costly) computations and a final check.

All of the above countermeasures proposing additional extra operations should particularly degrade the performance. The existence of fault failure analysis attacks stresses the need for special care when implementing secure cryptographic applications without degrading the performance.

In view of the foregoing, there is a need to further improve countermeasures against possible attacks of the safe-error injection type, by providing simple and efficient alternatives to existing solutions as presented above.

## SUMMARY

To address this need, a first aspect of the present invention proposes a cryptographic method comprising:

receiving a first message a;

generating a second message $b$ by computing a modular exponentiation $b = a^d \bmod n$, where $d$ is an integer expressed in binary representation as $d = (d_{k-1}\ d_{k-2}\ ...d_1 d_0)_2$ such that $d = \sum_{i=0}^{k-1} d_i \times 2^i$, with variable $d_i \in \{0,1\}$, where $n$ is a positive integer modulus, and where $R$ is the Montgomery constant defined as the smallest power of $g$ greater than $n$, where $g$ is a machine-word base,

wherein computing the modular exponentiation $b = a^d \bmod n$ comprises:

- initializing a first variable to $R$ modulus $n$ ;

- computing an iterative process a number $k$ of times, with $d_i$ successively taking values $d_{k-1}, d_{k-2}, ...d_1,$ and $d_0,$ respectively, each iteration of said iterative process comprising:

  - if $d_i$ is equal to 0, then inserting a countermeasure by replacing the first variable by the Montgomery multiplication of said first variable with $R,$ modulus $n.$

In one embodiment, computing the modular exponentiation $b = a^d \bmod n$ uses the Montgomery transformation and comprises:

- initializing the first variable and a second variable to $R$ modulus $n$ and to $axR$ modulus $n$, respectively;

- computing an iterative process a number $k$ of times, with $d_i$ successively taking values $d_{k-1}, d_{k-2}, ...d_1,$ and $d_0,$ respectively, each iteration of said iterative process comprising:

  - replacing the first variable by the Montgomery multiplication of said first variable with itself modulus $n$;

  - If $d_i$ is equal to 1, then replacing the first variable by the Montgomery of said first variable with the second variable modulus $n$; and,

  - If $d_i$ is equal to 0, then inserting a counter measure replacing the first variable by the Montgomery multiplication of said first variable with $R$, modulus $n$;

  and,

- replacing the first variable by the Montgomery multiplication of said first variable with unity, modulus $n$.

In case of RSA encryption or decryption operation, the message $a$ is the encrypted message $c$, and the message $b$ is a clear text message $m$.

In case of DSA cryptographic system, the first message $a$ is an integer $h$ and the second message $b$ is the public key $y$ and the exponent $d$ is the secret key $x$.

Stated otherwise, instead of computing a dummy multiplication $dummy = dummy \; x \; c \bmod n$ as with the so-called *"Square-and-Multiply Always"* countermeasure, the invention proposes to compute $result = MontMul(result,R,n)$ where $MontMul$ designates the Montgomery multiplication operation applied to the set of operands $(result,R,n)$. This way, a slight perturbation of any operand, and/or in the outcome of this calculation step will result in a modification of the final result of the binary exponentiation computation.

Montgomery Multiplication is described, in particular, in *"HandBook of Applied Cryptography",* by Menezes, van Oorschot, and Vanstone, Chapter 14.

The one with ordinary skills in the art will appreciate that introducing this operation in lieu of the dummy operation does not modify the final result due to the definition of the Montgomery multiplication.

Adding this countermeasure has nevertheless the effect that, during the modular exponentiation in, *e.g.* a RSA algorithm, any perturbation at any moment of the exponentiation algorithm will result in a modification in the final result. This advantage stems from the fact that this countermeasure operation is linked to the final result.

Stated otherwise, whereas using the Montgomery multiplication has no impact on the binary exponentiation computation in normal cases, the above mentioned property provides the result that any fault introduced during this computation will have visible effect of the final result.

The present invention thus provides a simple and efficient solution to thwart possible attacks of the safe-error injection type, by using the Montgomery multiplication in the calculation of the modular exponentiation during the exponentiation operation of any public key cryptosystem (like RSA, DSA, ...).

Using the Montgomery multiplication in such a way is novel and non-obvious, even if it has been intensively used to speed-up modular exponentiation computations.

Advantageously, embodiments of the proposed solution provide a fast and lightweight decryption process usable in any public key cryptosystem. Indeed, the present solution is faster than existing methods since it avoids the need of using an extra check operation to guarantee that no safe-error fault has been introduced during computations, given that a fault would reveal nothing to an attacker. In addition, it is lighter than readily available techniques since the algorithm does not need an extra register to store additional data. It is thus memory-optimized. In other words, the proposed "Montgomery multiplication" countermeasure is an advantageous alternative to other countermeasures resilient to safe-error fault injection attacks which are very costly in terms of computation performance and memory capacity.

The invention is also compatible with additional optimization which can be implemented to speed-up computation, as for example the sliding window algorithm.

A second aspect of the present invention relates to a computer program product comprising one or more stored sequences of instructions that are accessible to a processor and which, when executed by the processor, cause the processor to carry out the steps of the method of the first aspect of the present invention.

Finally, a third aspect of the invention relates to a cryptographic system comprising:

an interface for receiving a first message a ;

a computer unit adapted to generate a second message *b* by computing a modular exponentiation *b* = *a*^d *mod n,* where *d* is an integer expressed in binary representation as *d* = *(d_{k-1} d_{k-2} ...d_1 d_0)_2* such that $d = \sum_{i=0}^{k-1} d_i \times 2^i$ , with $d_i \in \{0,1\}$, where *n* is a positive integer modulus, and where *R* is the Montgomery constant defined as the smallest power of *g* greater than *n,* where *g* is a machine-word base,

wherein the computer unit is configured, for computing the modular exponentiation *b* = a^d *mod n,* to:

- initialize a first variable to *R* modulus *n,* and

- compute an iterative process a number *k* of times, with $d_i$ successively taking values $d_{k-1}$, $d_{k-2}$, $...d_1$, and $d_0$, respectively, each iteration of said iterative process comprising:

   • If $d_i$ is equal to 0, then inserting a counter measure replacing the first variable by the Montgomery multiplication of said first variable with *R*, modulus *n.*

In one embodiment, the computer unit is configured to use the Montgomery transformation for computing the modular exponentiation *b* = *a*^d *mod n,* and to:

• initialize the first variable and a second variable to *R* modulus *n* and to *axR* modulus *n* respectively;

• compute an iterative process a number k of times, with $d_i$ successively taking values $d_{k-1}$, $d_{k-2}$, $...d_1$, and $d_0$, respectively, each iteration of said iterative process comprising:

   - replacing the first variable by the Montgomery multiplication of said first variable with itself modulus *n*;

   - If $d_i$ is equal to 1, then replacing the first variable by the Montgomery of said first variable with the second variable modulus *n*; and,

   - If $d_i$ is equal to 0, then inserting a counter measure replacing the first variable by the Montgomery multiplication of said first variable with *R*, modulus *n*;

   and,

• replace the first variable by the Montgomery multiplication of said first variable with unity, modulus *n*.

Such a cryptographic system can be, for instance, a RSA or a DSA cryptosystem.

In some embodiments, the machine-word base *g* can be equal to $2^{32}$.

## BRIEF DESCRIPTION OF THE DRAWINGS

Embodiments of the present invention are illustrated by way of example, and not by way of limitation, in the figures of the accompanying drawings, in which like reference numerals refer to similar elements and in which:

- Figure 1 is a flow chart illustrating steps of an algorithm of the *"Square-And-Multiply Always"* type to calculate the binary exponentiation without the proposed "Montgomery multiplication" countermeasure;

- Figure 2 is a flow chart illustrating steps of the algorithm to calculate the binary exponentiation calculation with the Montgomery multiplication counter-measure; and,

- Figure 3 is a block diagram of an embodiment of the cryptosystem according to the third aspect of the invention, which is adapted to run a computer program product according to the second aspect.

## DESCRIPTION OF PREFERRED EMBODIMENTS

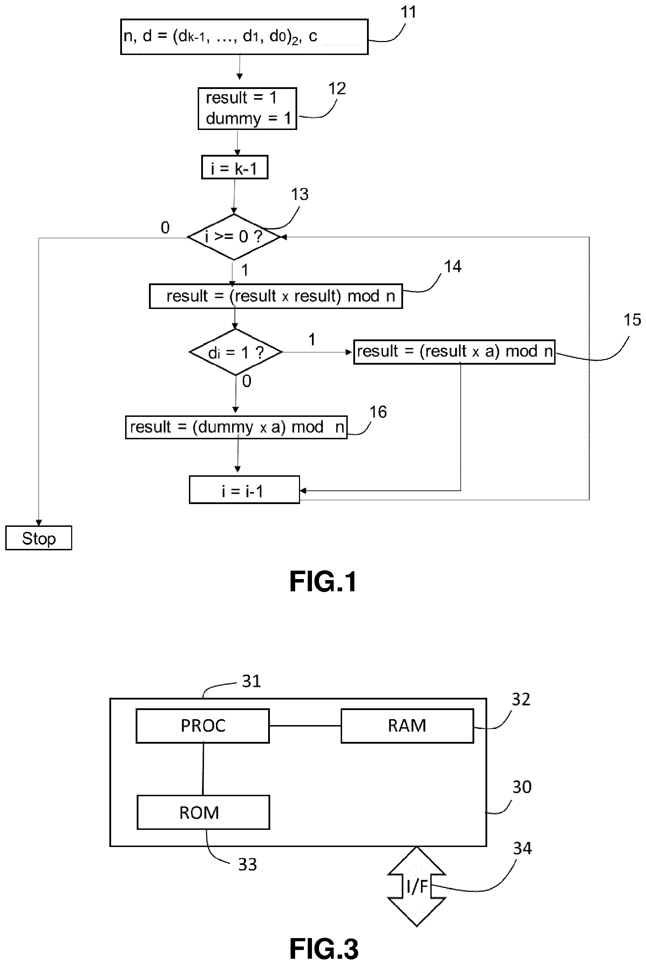

With reference to the flow chart of Figure 1 there will first be described an embodiment of the binary algorithm to calculate the exponentiation $b = a^d \ mod \ n$ without the proposed *"Montgomery multiplication"* countermeasure. Stated otherwise, Figure 1 shows a flowchart of a method wherein a countermeasure such as *"Square-And-Multiply Always"*, for instance, is introduced in the binary exponentiation process.

In case of RSA encryption or decryption operation, the message $a$ is the encrypted message $c$, and $b$ is a clear text message $m$.

In case of DSA cryptographic system, the first message $a$ is an integer $h$ and the second message $b$ is the public key $y$ and the exponent $d$ is the secret key $x$.

The algorithm according to the shown embodiment comprises the following steps 11 to 16.

At 11, various inputs used in the decryption operation are defined: these variables include the public modulus $n$, the private key $d$ and the first message $a$.

In one embodiment, the public modulus $n$ is a large number. In one example, $n$ can be a prime number. It will be appreciated by the one with ordinary skills in the art, however, that embodiments of the invention are not intended to be limited to such an example.

The private key $d$ can be expressed in binary representation, such as $d = (d_{k-1} \ d_{k-2} \ ...d_1 \ d_0)_2$, where $k$ is an integer greater than unity.

At 12 the variables *result* and *dummy* are both initialized to unity, namely *result = 1* and *dummy = 1*.

At 13, an iterative for-loop process is started, which is run a number $k$ of times, for index $i$ ranging from $k-1$ down to 0, respectively, namely for each one of the k binary elements (bits) $d_{k-1}$, $d_{k-2}$, $...d_1$, and $d_0$ of the exponent $d$ successively, starting for instance from the MSB (Most Significant bit) and ending with the LSB (least significant bit).

At 14 the squaring calculation of variable *result* is realized. More specifically, the variable *result* is replaced by *result $\times$ result mod n*.

If the current bit $d_i$ of the exponent is equal to '1', then, at 15, the variable *result* is replaced by *result $\times$ a mod n*.

Else, namely when the current bit $d_i$ of the exponent is equal to '0', the counter-measure *dummy $\times$ a mod n* is inserted at 16. This is obtained by replacing the variable *result* by *dummy $\times$ a mod n*.

The idea behind the invention is to replace dummy operations by other operations that always have a visible effect on the final result $a^d \ mod \ n$.

A simple way would be to replace the dummy operation by a multiplication by 1. The final result would not be affected in the absence of perturbation, and a perturbation during this computation would result with high probability in a modification of the final result. It may thus counter fault injection attacks in some cases. However, since the Hamming weight of '1' is 1, a modification of this unique bit will result in a null output. Thus, this would give information about operations being performed and could help an attacker to deduce the value of the private key.

A more secure way to achieve the same result makes use, according to embodiments, of the Montgomery multiplication.

While modular exponentiation is considered to be a complicated arithmetic operation because of the inherent multiplication and division operations, the mathematician Peter L. Montgomery introduced (in 1985) the modular reduction algorithm for multiplying two integers (called $n$-residues) modulo $n$ while avoiding division by $n$. In the technical literature (see for instance *"HandBook of Applied Cryptography"*, Menezes, van Oorschot, Vanstone, Chapter 14), the properties of the Montgomery calculation have been used to speed-up the modular multiplication and squaring operations required for exponentiation. It is implemented as a simple long-integer multiplication followed by a Montgomery reduction, said Montgomery reduction being so-to-speak the "reverse" operation of the Montgomery transform.

Namely, assuming that:

- $n$ is a large integer modulus,

- $p$ is an integer less than $2n$ (*i.e., p < 2n*).

- $R$ is the so-called Montgomery constant,

then the Montgomery form of $a$ is defined by: *pxR mod n,*

the Montgomery reduction is defined by: $pxR^{-1}$ *mod n,* where $R^{-1}$ is the inverse of *R*; and,

the Montgomery multiplication *MontMul* computes on input *(p,q,n)* the value $pxqxR^{-1}$ *mod n.*

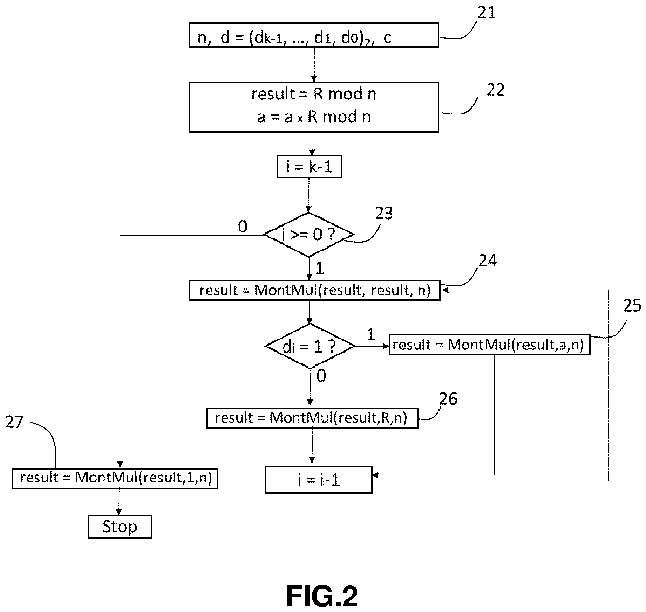

With reference to the flow chart of Figure 2, an exemplary embodiment of the first aspect of the invention will now be described. This aspect relates to a cryptographic method based on an algorithm allowing the calculation of the exponentiation $a^d$ modulus *n* with the Montgomery multiplication counter-measure proposed according to embodiments of the invention. The so-called Montgomery constant *R* is defined as the smallest power of *g* greater than *n,* where *g* is a machine-word base (on 32-bit systems, for instance, $g = 2^{32}$). In one example, *g* is equal to $2^{32}$. This is purely illustrative, however, as *g* may also be equal to $2^{16}$ or $2^{64}$, for instance.

At 21, the different inputs used by the computer means to carry out the method are defined or received: the modulus *n,* the private key *d* expressed in binary representation as $d = (d_{k-1}\ d_{k-2}\ ...d_1\ d_0)_2,$ and the first message *a.*

At 22, the variables, *result* and a are initialized to *R mod n* and to $a \times R$ *mod n,* respectively, with *R* being the smallest power of *f* greater than *n.*

At 23, there is launched the for-loop realizing the iteration from k-1 to 0 of the *k* binary elements, namely bits, of the exponent *d.* More specifically, in this example the *k* bits of the exponent *d* are processed from the MSB to the LSB. It will be appreciated by the one with ordinary skills in the art that running the calculations from the LSB toward the LSB is also a valid option.

At 24, the Montgomery multiplication of the squared variable *result* (namely *result×result*) is performed: *result×result×$R^{-1}$ mod n.*

At 25 if the bit $d_i$ of the exponent *d* is equal to '1', the Montgomery multiplication of *result* with a, i.e. *result×a×$R^{-1}$ modulus n* is computed and the variable *result* is updated to, i.e. replaced by same.

The countermeasure realizing the Montgomery multiplication of *result* with *R* is inserted at 26, when the current bit of the exponent is equal to '0'. More specifically, the variable *result* is replaced by *result×R×$R^{-1}$ modulus n.*

At 27, the process ends-up with the return back from the Montgomery form to normal form. This can be achieved by computing the Montgomery multiplication of the variable *result* with unity. Namely, *result* is replaced by *result ×1×$R^{-1}$ modulus n.*

One of the countermeasures readily known in the art consists in adding a dummy multiplication in the binary exponentiation algorithm. According to embodiments of the present invention, there is proposed to change this dummy multiplication by performing a Montgomery multiplication *MontMul(result,R,n).*

Using this method, a perturbation of any operand and/or any step during this computation will not allow the hacker to identify the current bit $d_i$ of the private key *d* because it will result in a modification of the final result. Accordingly, the proposed counter-measure is efficient against safe-error fault injection attacks.

The modification of the dummy multiplication by the Montgomery multiplication will not modify the final result in normal cases, namely absent any injection attack. This is due to the definition of the Montgomery multiplication which provides the following identity property:

$$MontMul(result,R,n) = result \times R \times R^{-1}\ mod\ n = result\ mod\ n$$

A particularly advantageous effect of the present invention is achieved when the method is used while the modular exponentiation is computed using Montgomery transformation. Indeed, the consumption signature of Montgomery multiplication may differ from the one of a modular multiplication, and thus the advantage of using the proposed « Montgomery multiplication » countermeasure when the modular exponentiation is computed using Montgomery transformation, is that the countermeasure totally eliminates any difference in power consumption for the computation performed when $d_i$ equals '0' and when $d_i$ equals '1'.

The one with ordinary skills in the art will appreciate, however, that computing the modular exponentiation using Montgomery transformation is not essential. Indeed, the « Montgomery multiplication » countermeasure according to embodiments of the present invention can be implemented only by changing the processing of the iterations in cases where $d_i$ equals '0'. In such implementations, all other steps are identical to steps of Figure 1 where a standard « dummy calculation » countermeasure is used. In particular, the processing of the iterations in cases where $d_i$ equals '1' can be a standard, modular multiplication.

In embodiments, the exponentiation algorithm with the proposed « Montgomery multiplication » countermeasure may be implemented, for instance, by the following pseudo-code:

```
Input: n, d = (d_k-1, …, d_1, d_0)₂, a
    R = "smallest power of b greater than n"
    result = R mod n
    a = a.R mod n
    for i = k-1 dowto 0 do
        result = MontMul(result, result, n)
        if d_i == 1 then
            result = MontMul(result, a, n)
        else
            result = MontMul(result, R, n)
        end if
    end for
    return MontMul(result, 1, n)
```

With reference to the block diagram of Figure 3, there will now be described an embodiment of a cryptosystem according to the third aspect of the invention. Such cryptosystem can comprise a computer unit adapted to run a computer program product comprising one or more stored sequences of instructions that are accessible to a processor and which, when executed by the processor, cause the processor to carry out the cryptographic method.

In the shown embodiment, the computer unit 30 comprises at least one processor 31, at least one memory 32 to store data used during the execution of the calculations by the processor 31, and at least one rewritable non-volatile memory 33 used to store *e.g.* specific parameters or running commands to properly execute the method.

Memory 32 can be a Random Access Memory (RAM) of any suitable type, for instance a SRAM, a DRAM or SDRAM. Memory 33 can be a Read Only Memory (ROM), of any suitable type for instance an EPROM or a Flash memory.

The cryptosystem further comprises an interface 34 (I/F) for receiving the message *a,* for instance a message *c* to be decrypted in the context of the RSA, and for issuing the message *b*, for instance the clear text *m* once decrypted in said context.

This invention avoids the need of using an extra check to guarantee that no safe-error fault has been introduced during computations. It allows getting a faster computation of the algorithm. This algorithm is also memory-optimized since it does not need an extra register to store additional data.

It is also immune to Simple Power Analysis (SPA). SPA is based on the natural idea that multiplication and squaring may not result in the same power consumption. It is therefore a passive attack, where the hacker monitors power traces of a cryptographic device executing a modular exponentiation. One expects to retrieve the sequence of squaring and multiplication that was actually executed, from the power traces, to deduce therefrom critical information used in the cryptosystem.

Embodiments of the invention have been described in the foregoing within the context of the decryption operation in a RSA algorithm. It shall be noted, however, that the invention is not limited to this example and that it can be embodied in many other public key cryptographic systems (cryptosystems) like, for instance, DSA.

In addition, the present invention can also be used in any application where a computing device implements an operation that computes the calculation of *exfxR⁻¹ mod n* for any variables *e, f, R, n*. In that case, the device shall first compute *e' = e×R mod n* and *f' = f×R mod n* to transform variables *e* and *f* in the Montgomery form, and then runs with the operations described above using e' and f' in lieu of *e* and *f*, respectively.

Finally, it will be further appreciated by the one with ordinary skills in the art that the proposed method is compatible with the implementation of various known additional optimization processes to speed up computation, as for example the sliding window algorithm.

**Claims**

1.  A cryptographic method comprising:

    Receiving a first message *a ;*
    Generating a second message *b* by computing a modular exponentiation *b=a^d mod n,* where *d* is an integer expressed in binary representation as *d = (d_{k-1} d_{k-2} …d_1d_0)_2* such that $d = \sum_{i=0}^{k-1} d_i \times 2^i$, with variable *d_i*

$\in \{0,1\}$, where $n$ is a positive integer modulus, and where $R$ is the Montgomery constant defined as the smallest power of $g$ greater than $n$, where $g$ is a machine-word base,
wherein computing the modular exponentiation $b=a^d \bmod n$ comprises:

- initializing a first variable to $R$ modulus $n$ ;
- computing an iterative process a number k of times, with $d_i$ successively taking values $d_{k-1}, d_{k-2}, ...d_1$, and $d_0$, respectively, each iteration of said iterative process comprising:

  - If $d_i$ is equal to 0, then inserting a counter measure replacing the first variable by the Montgomery multiplication of said first variable with $R$, modulus $n$.

2. The cryptographic method of Claim 1, wherein computing the modular exponentiation $b=a^d \bmod n$ uses the Montgomery transformation and comprises:

- initializing the first variable and a second variable to $R$ modulus $n$ and to $cxR$ modulus $n$ respectively;
- computing an iterative process a number k of times, with $d_i$ successively taking values $d_{k-1}, d_{k-2}, ...d_1$, and $d_0$, respectively, each iteration of said iterative process comprising:

  - replacing the first variable by the Montgomery multiplication of said first variable with itself modulus $n$;
  - If $d_i$ is equal to 1, then replacing the first variable by the Montgomery of said first variable with the second variable modulus $n$; and,
  - If $d_i$ is equal to 0, then inserting a counter measure replacing the first variable by the Montgomery multiplication of said first variable with $R$, modulus $n$;

  and,
- Replacing the first variable by the Montgomery multiplication of said first variable with unity, modulus $n$.

3. The cryptographic method of Claim 1, wherein $a$ is an encrypted message $c$ and $b$ is a clear text message $m$ in case of RSA encryption or decryption operation.

4. The cryptographic method of Claim 1, wherein $a$ is an integer $g$ and $b$ is the public key $y$ and the exponent $d$ is the secret key $x$ in case of DSA cryptographic system.

5. The cryptographic method of Claim 1 or 2, wherein the modulus $n$ is the public modulus of a public key cryptographic system.

6. The cryptographic method of any one of the preceding claims, wherein the integer $d$ is a private key of public key cryptographic system.

7. The cryptographic method of any one of the preceding claims wherein the integer $d$ is a 16-bit long or 32-bit long random integer.

8. The cryptographic method of any one of the preceding claims, further comprising the implementation of a sliding window optimization algorithm to speed up computation.

9. A computer program product comprising one or more stored sequences of instructions that are accessible to a processor and which, when executed by the processor, cause the processor to carry out the steps of the method of anyone of claims 1 to 8.

10. A cryptographic system comprising:

an interface (34) for receiving a first message a;
a computer unit (30) adapted to generate a second message $b$ by computing a modular exponentiation $b = a^d \bmod n$, where $d$ is an integer expressed in binary representation as $d = (d_{k-1}\ d_{k-2} ...d_1 d_0)_2$ such that

$$d = \sum_{i=0}^{k-1} d_i \times 2^i ,$$ with $d_i \in \{0,1\}$, where $n$ is a positive integer modulus, and where $R$ is the Montgomery constant defined as the smallest power of $g$ greater than $n$, where $g$ is a machine-word base,

wherein the computer unit is configured, for computing the modular exponentiation $b = a^d \bmod n,$ to:

- initialize a first variable to $R$ modulus $n,$ and
- compute an iterative process a number $k$ of times, with $d_i$ successively taking values $d_{k\text{-}1}, d_{k\text{-}2}, ...d_1,$ and $d_0,$ respectively, each iteration of said iterative process comprising:

  • If $d_i$ is equal to 0, then inserting a counter measure replacing the first variable by the Montgomery multiplication of said first variable with $R$ modulus $n.$

**11.** The cryptographic system of Claim 10, wherein the computer unit is configured to use the Montgomery transformation for computing the modular exponentiation $b=a^d \bmod n,$ and to:

• initialize the first variable and a second variable to $R$ modulus $n$ and to $axR$ modulus $n$ respectively;
• compute an iterative process a number $k$ of times, with $d_i$ successively taking values $d_{k\text{-}1}, d_{k\text{-}2}, ...d_1,$ and $d_0,$ respectively, each iteration of said iterative process comprising:

  - replacing the first variable by the Montgomery multiplication of said first variable with itself modulus $n$;
  - If $d_i$ is equal to 1, then replacing the first variable by the Montgomery of said first variable with the second variable modulus $n$; and,
  - If $d_i$ is equal to 0, then inserting a counter measure replacing the first variable by the Montgomery multiplication of said first variable with $R$, modulus $n$;

and,
• replace the first variable by the Montgomery multiplication of said first variable with unity, modulus $n$.

**12.** The cryptographic system of any one of Claims 10 and 11, wherein the machine-word base $g$ equals $2^{32}$.


**Patentansprüche**

**1.** Kryptografisches Verfahren, umfasst:

den Empfang einer ersten Nachricht $a$;
die Erzeugung einer zweiten Nachricht $b$ durch Berechnung einer modularen Exponentiation $b=a^d \bmod n,$ wobei $d$ eine Ganzzahl ist, die in Binärdarstellung als $d = (d_{k\text{-}1}\, d_{k\text{-}2}\, ...d_1 d_0)_2$ ausgedrückt wird, sodass

$$d = \sum_{i=0}^{k-1} d_i \times 2^i,$$ mit der Variablen $d1 \in \{0,1\}$, wobei $n$ ein positiver ganzzahliger Teilungsrest ist. Dabei ist $R$
die Montgomery-Konstante ist, die als die kleinste Potenz von $g$ größer als $n$ definiert *wird,* wobei $g$ eine Maschinenwort-Basis ist.
Dabei umfasst die Berechnung der modularen Exponentiation $b=a^d \bmod n$ Folgendes:

• die Initialisierung einer Variablen zu $R$ Modulo $n$,
• die Berechnung eines iterativen Prozesses, der k-mal wiederholt wird, wobei di nacheinander die Werte $d_{k\text{-}1}, d_{k\text{-}2}, ...d_1,$ und $d_0$ annimmt. Dabei umfasst jede Iteration des iterativen Prozesses Folgendes:

  - Wenn $d_i$ gleich 0 ist: Das Einfügen einer Gegenmaßnahme, bei der die erste Variable durch die Montgomery-Multiplikation der ersten Variablen mit $R$ Modulo $n$ ersetzt *wird.*

**2.** Kryptografisches Verfahren nach Anspruch 1, wobei für die Berechnung der modularen Exponentiation $b=a^d \bmod n$ die Montgomery-Transformation verwendet wird und Folgendes umfasst:

• die Initialisierung der ersten Variablen zu $R$ Modulo $n$ und einer zweiten Variablen zu $cxR$ Modulo $n$;
• die Berechnung eines iterativen Prozesses, der k-mal wiederholt wird, wobei di nacheinander die Werte $d_{k-1}, d_{k-2}, ...d_1$ und $d_0$ annimmt. Dabei umfasst jede Iteration dieses iterativen Prozesses Folgendes:

  - das Ersetzen der ersten Variablen durch die Montgomery-Multiplikation dieser ersten Variablen mit sich selbst Modulo $n$;

- Wenn $d_i$ gleich 1 ist, das Ersetzen der ersten Variablen durch die Montgomery-Operation dieser ersten Variablen mit der zweiten Variablen Modulo $n$ und
- wenn $d_i$ gleich 0 ist, das Einfügen einer Gegenmaßnahme, bei der die erste Variable durch die Montgomery-Multiplikation der ersten Variablen mit $R$ Modulo $n$ ersetzt *wird;*

und

• das Ersetzen der ersten Variablen durch die Montgomery-Multiplikation der ersten Variablen mit Einheit, Modulo $n$.

3. Kryptografisches Verfahren nach Anspruch 1, wobei $a$ eine verschlüsselte Nachricht $c$ und $b$ eine Klartextnachricht $m$ im Falle einer RSA-Verschlüsselungs- bzw. Entschlüsselungsoperation ist.

4. Kryptografisches Verfahren nach Anspruch 1, wobei a eine Ganzzahl $g$ ist und $b$ der öffentliche Schlüssel y und der Exponent $d$ der geheime Schlüssel $x$ im Falle eines DSA-Kryptographie-Systems ist.

5. Kryptografisches Verfahren nach Anspruch 1 oder 2, wobei Modulo $n$ die öffentliche Modulo-Ausführung eines kryptografischen Systems mit öffentlichem Schlüssel ist.

6. Kryptografisches Verfahren nach einem der vorhergehenden Ansprüche, wobei die Ganzzahl $d$ ein privater Schlüssel eines kryptografischen Systems mit öffentlichem Schlüssel ist.

7. Kryptografisches Verfahren nach einem der vorhergehenden Ansprüche, wobei die Ganzzahl $d$ eine zufällige Ganzzahl ist, die 16-Bit oder 32-Bit lang ist.

8. Kryptografisches Verfahren nach einem der vorhergehenden Ansprüche, das ferner die Implementierung eines Sliding-Window-Algorithmus zur schnelleren Berechnung umfasst.

9. Computerprogrammprodukt, dass eine oder mehrere gespeicherte Befehlssequenzen umfasst, die für einen Prozessor zugänglich sind und die bei ihrer Ausführung durch den Prozessor
den Prozessor dazu veranlassen, die Verfahrensschritte aller Ansprüche 1 bis 8 durchzuführen.

10. Kryptografisches System umfasst: eine Schnittstelle (34) zum Empfang einer ersten Nachricht $a$;
eine Rechnereinheit (30), die dazu geeignet ist, eine zweite Nachricht $b$ durch Berechnung einer modularen Exponentiation $b = a^d \bmod n$ zu erzeugen, wobei $d$ eine Ganzzahl ist, die in Binärdarstellung als $d = (d_{k-1}\, d_{k-2} \dots d_1 d_0)_2$

ausgedrückt wird, sodass $d = \sum_{i=0}^{k-1} d_i \times 2^i$ *ist, mit* $d_i \in \{0,1\}$, wobei $n$ ein positiver ganzzahliger Teilungsrest ist, und wobei $R$ die Montgomery-Konstante ist, die als die kleinste Potenz von $g$ größer als $n$ definiert *wird und* wobei $g$ eine Maschinenwort-Basis ist,
wobei die Rechnereinheit zur Berechnung der modularen Exponentiation
$b = a^d \bmod n$ konfiguriert ist, um:

- eine erste Variable *zu R* Modulo $n$ zu initialisieren und
- einen iterativen Prozess $k$-mal zu berechnen, wobei di nacheinander die Werte $d_{k-1}$, $d_{k-2}$, ... $d_1$ und $d_0$ annimmt. Dabei umfasst jede Iteration des iterativen Prozesses Folgendes:

• Wenn $d_i$ gleich 0 ist: Das Einfügen einer Gegenmaßnahme, bei der die erste Variable durch die Montgomery-Multiplikation der ersten Variablen mit $R$ Modulo $n$ ersetzt *wird.*

11. Kryptografisches System nach Anspruch 10,
wobei die Rechnereinheit so konfiguriert ist, dass die Montgomery-Transformation zur Berechnung der modularen *Exponentiation* $b=a^d \bmod n$ verwendet wird und um:

• die erste Variable *zu R* Modulo $n$ und eine zweite Variable zu $axR$ Modulo $n$ zu initialisieren;
• einen iterativen Prozess $k$-mal zu berechnen, wobei di nacheinander die Werte $d_{k-1}$, $d_{k-2}$, ... $d_1$ bzw. $d_0$ annimmt. Dabei umfasst jede Iteration des iterativen Prozesses Folgendes:

- das Ersetzen der ersten Variablen durch die Montgomery-Multiplikation dieser ersten Variablen mit sich selbst Modulo $n$;
- Wenn $d$ gleich 1 ist: das Ersetzen der ersten Variablen durch die Montgomery-Operation dieser ersten Variablen mit der zweiten Variablen Modulo $n$ und
- Wenn $d$ gleich 0 ist: das Einfügen einer Gegenmaßnahme, bei der die erste Variable durch die Montgomery-Multiplikation der ersten Variablen mit R Modulo n ersetzt wird,

und
• um die erste Variable durch die Montgomery-Multiplikation dieser ersten Variablen mit Einheit Modulo $n$ zu ersetzen.

**12.** Kryptografisches System nach einem der Ansprüche 10 und 11, wobei die Maschinenwort-Basis $g$ gleich $2^{32}$ ist.

**Revendications**

**1.** Procédé cryptographique comprenant :

La réception d'un premier message $a$ ;
La génération d'un second message $b$ en calculant une exponentiation modulaire $b = a^d \bmod n$, où $d$ est un entier exprimé en représentation binaire sous la forme $d = (d_{k-1}\ d_{k-2}...d_1 d_0)_2$ de telle sorte que $d = \sum_{i=0}^{k-1} d_i \times 2^i$, avec la variable $d_1 \in \{0,1\}$ où $n$ est un module entier positif, et où $R$ est la constante de Montgomery définie comme la plus petite puissance de $g$ supérieure à $n$, où $g$ est une base de mot machine, où le calcul de l'exponentiation modulaire $b = a^d \bmod n$ comprend :

• l'initialisation d'une première variable au module $n R$ ;
• le calcul d'un procédé itératif un nombre k de fois, $d_i$ prenant successivement les valeurs $d_{k-1}, d_{k-2}, ...d_1$, et $d_0$, respectivement, chaque itération dudit procédé itératif comprenant :

- si $d_i$ est égal à 0, l'insertion d'une contre-mesure en remplaçant la première variable par la multiplication de Montgomery de ladite première variable par le module $n R$.

**2.** Procédé cryptographique selon la revendication 1, où le calcul de l'exponentiation modulaire $b = a^d \bmod n$ utilise la transformation de Montgomery et comprend :

• l'initialisation de la première variable et une seconde variable au module $n R$ et au module $cxR\ n$, respectivement ;
• le calcul d'un procédé itératif un nombre k de fois, $d_i$ prenant successivement les valeurs $d_{k-1}, d_{k-2}, ...d_1$, et $d_0$, respectivement, chaque itération dudit procédé itératif comprenant :

- le remplacement de la première variable par la multiplication de Montgomery de ladite première variable par le module $n$ ;
- si $d_i$ est égal à 1, le remplacement de la première variable par la multiplication de Montgomery de ladite première variable par le module $n$ de la seconde variable ; et
- si $d_i$ est égal à 0, l'insertion d'une contre-mesure en remplaçant la première variable par la multiplication de Montgomery de ladite première variable par le module $n R$ ;

et
• le remplacement de la première variable par la multiplication de Montgomery de ladite première variable par le module $n$ de l'unité.

**3.** Procédé cryptographique selon la revendication 1, où a est un message crypté $c$ et b est un message en texte clair $m$ dans le cas d'une opération de cryptage ou de décryptage RSA.

**4.** Procédé cryptographique selon la revendication 1, où a est un entier $g$ et b est la clé publique y et l'exposant $d$ est la clé secrète $x$ dans le cas d'un système cryptographique DSA.

5. Procédé cryptographique selon la revendication 1 ou 2, où le module $n$ est le module public d'un système cryptographique à clé publique.

6. Procédé cryptographique selon l'une quelconque des revendications précédentes, où l'entier $d$ est une clé privée d'un système cryptographique à clé publique.

7. Procédé cryptographique selon l'une quelconque des revendications précédentes, où l'entier $d$ est un entier aléatoire de 16 ou 32 bits.

8. Procédé cryptographique selon l'une quelconque des revendications précédentes, comprenant en outre la mise en œuvre d'un algorithme d'optimisation de fenêtre coulissante pour accélérer le calcul.

9. Produit de programme informatique comprenant une ou plusieurs séquences d'instructions stockées qui sont accessibles à un processeur et qui, lorsqu'elles sont exécutées par ce dernier, l'amènent
à exécuter les étapes de la méthode selon l'une quelconque des revendications 1 à 8.

10. Système cryptographique comprenant : une interface (34) pour recevoir un premier message $a$ ;
une unité informatique (30) conçue pour générer un second message $b$ en calculant une exponentiation modulaire
$b = a^d \bmod n$, où $d$ est un entier exprimé en représentation binaire sous la forme $d = (d_{k-1} d_{k-2} ...d_1 d_0)_2$ de telle sorte

que $d = \sum_{i=0}^{k-1} d_i \times 2^i$, $avec$ $d_i \in \{0,1\}$, où $n$ est un module entier positif, et où $R$ est la constante de Montgomery
définie comme la plus petite puissance de $g$ supérieure à $n$, où $g$ est une base de mot machine,
où l'unité informatique est configurée pour le calcul de l'exponentiation modulaire $b = a^d \bmod n$, afin :

- d'initialiser une première variable du module $n$ $R$, et
- de calculer un procédé itératif un nombre k de fois, di prenant successivement les valeurs $d_{k-1}$, $d_{k-2}$, ... $d_1$ et $d_0$, respectivement, chaque itération dudit procédé itératif comprenant :

   • si $d_i$ est égal à 0, l'insertion d'une contre-mesure en remplaçant la première variable par la multiplication de Montgomery de ladite première variable par le module $n$ $R$ ;

11. Système cryptographique selon la revendication 10,
où l'unité informatique est configurée de façon à utiliser la transformation de Montgomery pour calculer l'exponentiation modulaire $b = a^d \bmod n$, et pour :

   • initialiser la première variable et une seconde variable au module $n$ de $R$ et au module $n$ $axR$, respectivement ;
   • calculer un procédé itératif un nombre k de fois, di prenant successivement les valeurs $d_{k-1}$, $d_{k-2}$, ...$d_1$, et $d_0$, respectivement, chaque itération dudit procédé itératif comprenant :

      - le remplacement de la première variable par la multiplication de Montgomery de ladite première variable par le module $n$ ;
      - si $d$ est égal à 1, le remplacement de la première variable par la multiplication de Montgomery de ladite première variable par le module $n$ de la seconde variable ; et
      - si $d$ est égal à 0, l'insertion d'une contre-mesure en remplaçant la première variable par la multiplication de Montgomery de ladite première variable par le module $n$ $R$ ;

   et
   • remplacer la première variable par la multiplication de Montgomery de ladite première variable par le module $n$ de l'unité.

12. Système cryptographique selon l'une quelconque des revendications 10 et 11, où la base de mot machine $g$ est égale à $2^{32}$.

n, d = $(d_{k-1}, \ldots, d_1, d_0)_2$, c ⟍ 11

result = 1
dummy = 1 ⟍ 12

i = k-1

i >= 0 ? ⟍ 13

0

1

result = (result x result) mod n ⟍ 14

$d_i$ = 1 ?

1

result = (result x a) mod n ⟍ 15

0

result = (dummy x a) mod n ⟍ 16

i = i-1

Stop

**FIG.1**

PROC ⟍ 31

RAM ⟍ 32

ROM

30

I/F ⟍ 34

⟍ 33

**FIG.3**

$n,\ d = (d_{k-1}, ..., d_1, d_0)_2,\ c$  21

result = R mod n
$a = a \times R$ mod n  22

i = k-1

i >= 0 ?  23

0

1

result = MontMul(result, result, n)  24

25

$d_i = 1$ ?  1  result = MontMul(result,a,n)

0

result = MontMul(result,R,n)  26

27  result = MontMul(result,1,n)  i = i-1

Stop

# FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9852319 A
- FR 2884088
- EP 2222012 A
- US 8139763 B
- EP 1531579 A

### Non-patent literature cited in the description

- **RIVEST, R.L ; SHAMIR, A. ; ADELMAN, L.M.** A method for obtaining digital signatures and public-key cyptosystems. *Technical Report MIT/LCS/TM-82,* 1977
- **PETER L.** *Montgomery introduced,* 1985
- **MENEZES ; VAN OORSCHOT ; VANSTONE.** HandBook of Applied Cryptography